(19) Europäisches Patentamt
European Patent Office
Office européen des brevets

(11) **EP 4 253 130 A1**

(12) **EUROPEAN PATENT APPLICATION**

(43) Date of publication:
04.10.2023 Bulletin 2023/40

(21) Application number: 23158039.0

(22) Date of filing: 22.02.2023

(51) International Patent Classification (IPC):
**B60L 53/36** (2019.01)       **B60L 53/65** (2019.01)
**B60L 53/80** (2019.01)       **B60L 53/30** (2019.01)
**B60L 53/66** (2019.01)       **B60L 53/68** (2019.01)

(52) Cooperative Patent Classification (CPC):
**B60L 53/80; B60L 53/305; B60L 53/36;**
**B60L 53/65; B60L 53/66; B60L 53/68;** Y02T 90/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 CN 202210279422**

(71) Applicant: **Nio Technology (Anhui) Co., Ltd**
**Hefei City, Anhui 230601 (CN)**

(72) Inventors:
• **WANG, Yifei**
**Hefei, Anhui, 230601 (CN)**
• **GUO, Jianfei**
**Hefei, Anhui, 230601 (CN)**
• **ZOU, Jiyong**
**Hefei, Anhui, 230601 (CN)**

(74) Representative: **Vossius & Partner**
**Patentanwälte Rechtsanwälte mbB**
**Siebertstraße 3**
**81675 München (DE)**

(54) **METHOD AND COMPUTER SYSTEM FOR CONTROLLING VEHICLE BATTERY SWAPPING, MEDIUM, AND VEHICLE**

(57) The disclosure relates to a method for controlling vehicle battery swapping, a computer system for implementing the method, a computer storage medium, and a vehicle. According to an aspect of the disclosure, the method for controlling vehicle battery swapping includes the following steps: in response to a vehicle entering a ranging range of a plurality of ultra wide band devices arranged in a battery swap station, sensing a distance between the vehicle and the battery swap station by using the plurality of ultra wide band devices; determining, based on the sensed distance between the vehicle and the battery swap station, whether the vehicle is in a predetermined battery swap area; in response to determining that the vehicle is in the predetermined battery swap area, determining whether the vehicle is a target service vehicle; and in response to determining that the vehicle is a target service vehicle, enabling an auxiliary battery swapping operation to guide the vehicle to a battery swap platform from the predetermined battery swap area.

EP 4 253 130 A1

*FIG. 1*

**Description**

**Technical Field**

The disclosure relates to the field of electric vehicles, and more specifically, to a method for controlling vehicle battery swapping, a computer system for implementing the method, a computer storage medium, and a vehicle.

**Background Art**

At present, there are two main modes of energy supply for a battery electric vehicle: vehicle charging and battery replacement. In the vehicle charging mode, AC slow charging causes a long charging time and is limited by a parking place, while DC fast charging, though it shortens the charging time through a high power, has a great impact on a power grid and reduces the service life of the battery. In the battery replacement mode, the battery swap station can implement orderly charging by interacting with the power grid, and improve the comprehensive utilization efficiency of a power device, thereby quickly supplying energy to the electric vehicle, reducing waiting time of users, and not reducing the service life of the battery. Therefore, the battery replacement mode has high popularization value and economic significance in the urban public transportation field in China.

With the increasing intelligence degree of the battery swap station, the battery swap station has basically implemented automation and intelligence in many scenarios. However, a fully reliable sensing mechanism has not been established for an interaction process between the battery swap station and the vehicle. For example, a solution using pure vision needs to rely on historical information such as license plate, body color and the like for comparison, and it is difficult to implement full coverage of vehicle usage scenarios. A fusion scheme based on a laser radar has higher cost, the cost of reconstructing an existing station is higher, and the service life of the laser radar is limited, which is not conducive to practical implementation.

**Summary of the Disclosure**

In order to solve or at least alleviate one or more of the above problems, the following technical solutions are provided.

According to a first aspect of the disclosure, a method for controlling vehicle battery swapping is provided, including the following steps: in response to a vehicle entering a ranging range of a plurality of ultra wide band devices arranged in a battery swap station, sensing a distance between the vehicle and the battery swap station by using the plurality of ultra wide band devices; determining, based on the sensed distance between the vehicle and the battery swap station, whether the vehicle is in a predetermined battery swap area; in response to determining that the vehicle is in the predetermined battery swap area, determining whether the vehicle is a target service vehicle; and in response to determining that the vehicle is a target service vehicle, enabling an auxiliary battery swapping operation to guide the vehicle to a battery swap platform from the predetermined battery swap area.

According to the method for controlling vehicle battery swapping in an embodiment of the disclosure, the method further includes: in response to determining that the vehicle is not a target service vehicle, instructing the vehicle to leave the predetermined battery swap area.

According to the method for controlling vehicle battery swapping in an embodiment or any one of the above embodiments of the disclosure, the auxiliary battery swapping operation includes one or more of the following: opening the door of the battery swap station, planning a parking path, monitoring the parking path, detecting in-position parking of the vehicle, and monitoring a posture of the vehicle in the station.

According to the method for controlling vehicle battery swapping in an embodiment or any one of the above embodiments of the disclosure, the method further includes: using one or more image collection devices arranged in the battery swap station to collect an image of the vehicle; using a convolutional neural network to process the collected image of the vehicle; and determining, based on a processing result of the convolutional neural network, whether the vehicle is in the predetermined battery swap area.

According to the method for controlling vehicle battery swapping in an embodiment or any one of the above embodiments of the disclosure, the determining whether the vehicle is a target service vehicle further includes: using the plurality of ultra wide band devices arranged in the battery swap station to establish a communication path with the vehicle; receiving an authentication signal from the vehicle via the established communication path and determining, based on the authentication signal, whether the vehicle is a vehicle in a current service list; and in response to determining that the vehicle is a vehicle in the current service list, determining that the vehicle is a target service vehicle.

According to the method for controlling vehicle battery swapping in an embodiment or any one of the above embodiments of the disclosure, the method further includes: in response to determining that the vehicle is a target service vehicle, determining location information of the vehicle by using the plurality of ultra wide band devices.

According to the method for controlling vehicle battery swapping in an embodiment or any one of the above embodiments of the disclosure, the method further includes: in response to determining that the vehicle is a target service vehicle, enabling a sensor device arranged in the battery swap station.

According to the method for controlling vehicle battery swapping in an embodiment or any one of the above embodiments of the disclosure, the method further includes: in response to determining that the vehicle is a target service vehicle, instructing the vehicle to enable an automatic parking operation.

According to the method for controlling vehicle battery swapping in an embodiment or any one of the above embodiments of the disclosure, the plurality of ultra wide band devices arranged in the battery swap station are configured in the following manners: a strength, of a signal sent by each of the plurality of ultra wide band devices, obtained when the signal arrives at the vehicle is greater than or equal to a preset strength threshold; a duration, of a signal sent by each of the plurality of ultra wide band devices, obtained when the signal arrives at the vehicle is greater than or equal to a preset duration threshold; and a quantity of the plurality of ultra wide band devices is greater than or equal to a preset quantity threshold.

According to a second aspect of the disclosure, a computer system for controlling vehicle battery swapping is provided, including: a memory; a processor; and a computer program stored on the memory and executable on the processor, where the execution of the computer program causes the following steps to be performed: in response to a vehicle entering a ranging range of a plurality of ultra wide band devices arranged in a battery swap station, sensing a distance between the vehicle and the battery swap station by using the plurality of ultra wide band devices; determining, based on the sensed distance between the vehicle and the battery swap station, whether the vehicle is in a predetermined battery swap area; in response to determining that the vehicle is in the predetermined battery swap area, determining whether the vehicle is a target service vehicle; and in response to determining that the vehicle is a target service vehicle, enabling an auxiliary battery swapping operation to guide the vehicle to a battery swap platform from the predetermined battery swap area.

According to the computer system for controlling vehicle battery swapping in an embodiment of the disclosure, the execution of the computer program further causes the following step to be performed: in response to determining that the vehicle is not a target service vehicle, instructing the vehicle to leave the predetermined battery swap area.

According to the computer system for controlling vehicle battery swapping in an embodiment or any one of the above embodiments of the disclosure, the auxiliary battery swapping operation includes one or more of the following: opening the door of the battery swap station, planning a parking path, monitoring the parking path, detecting in-position parking of the vehicle, and monitoring a posture of the vehicle in the station.

According to the computer system for controlling vehicle battery swapping in an embodiment or any one of the above embodiments of the disclosure, the execution of the computer program further causes the following step to be performed: using one or more image collection devices arranged in the battery swap station to collect an image of the vehicle; using a convolutional neural network to process the collected image of the vehicle; and determining, based on a processing result of the convolutional neural network, whether the vehicle is in the predetermined battery swap area.

According to the computer system for controlling vehicle battery swapping in an embodiment or any one of the above embodiments of the disclosure, the determining whether the vehicle is a target service vehicle further includes: using the plurality of ultra wide band devices arranged in the battery swap station to establish a communication path with the vehicle; receiving an authentication signal from the vehicle via the established communication path and determining, based on the authentication signal, whether the vehicle is a vehicle in a current service list; and in response to determining that the vehicle is a vehicle in the current service list, determining that the vehicle is a target service vehicle.

According to the computer system for controlling vehicle battery swapping in an embodiment or any one of the above embodiments of the disclosure, the execution of the computer program further causes the following step to be performed: in response to determining that the vehicle is a target service vehicle, determining location information of the vehicle by using the plurality of ultra wide band devices.

According to the computer system for controlling vehicle battery swapping in an embodiment or any one of the above embodiments of the disclosure, the execution of the computer program further causes the following step to be performed: in response to determining that the vehicle is a target service vehicle, enabling a sensor device arranged in the battery swap station.

According to the computer system for controlling vehicle battery swapping in an embodiment or any one of the above embodiments of the disclosure, the execution of the computer program further causes the following step to be performed: in response to determining that the vehicle is a target service vehicle, instructing the vehicle to enable an automatic parking operation.

According to the computer system for controlling vehicle battery swapping in an embodiment or any one of the above embodiments of the disclosure, the plurality of ultra wide band devices arranged in the battery swap station are configured in the following manners: a strength, of a signal sent by each of the plurality of ultra wide band devices, obtained when the signal arrives at the vehicle is greater than or equal to a preset strength threshold; a duration, of a signal sent by each of the plurality of ultra wide band devices, obtained when the signal arrives at the vehicle is greater than or equal to a preset duration threshold; and a quantity of the plurality of ultra wide band devices is greater than or equal to a preset quantity threshold.

According to a third aspect of the disclosure, a computer storage medium is provided, including instructions, where when the instructions are run, the steps of the method for controlling vehicle battery swapping according to the first aspect of the disclosure are performed.

According to a fourth aspect of the disclosure, a vehicle is provided, where the vehicle travels to a battery swap platform in response to the method for controlling vehicle battery swapping according to the first aspect of the disclosure.

According to one or more embodiments of the disclosure, the solution for controlling vehicle battery swapping can implement a ranging function of the battery swap station for the vehicle by establishing interaction between the battery swap station and the vehicle using the ultra wide band device, enable a verification function for a vehicle identity after the ranging function is completed, and automatically enable an auxiliary battery swapping operation after the ranging is completed and identity verification is passed, to guide the vehicle to the battery swap platform, so that a tedious battery swapping process requiring repeated confirmation by a user is converted into a fully automatic battery swapping initial process, which improves the battery swapping efficiency and user experience, and reduces the labor cost of the battery swap station.

## Brief Description of the Drawings

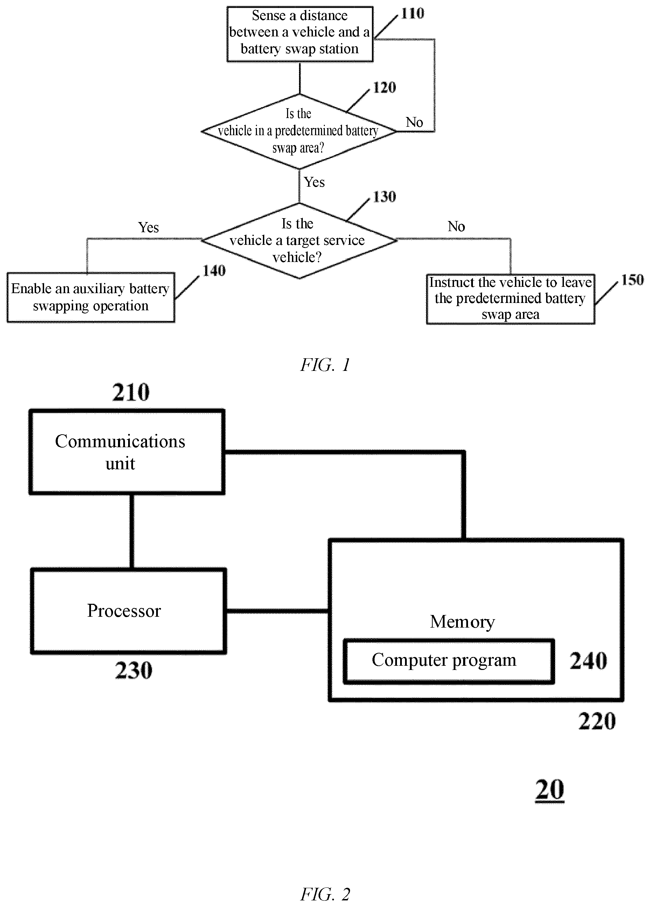

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings: FIG. 1 is a flowchart of a method for controlling vehicle battery swapping according to one or more embodiments of the disclosure;

FIG. 2 is a schematic block diagram of a computer system for controlling vehicle battery swapping according to one or more embodiments of the disclosure;
FIG. 3 is a schematic diagram of arranging an ultra wide band device according to one or more embodiments of the disclosure; and
FIG. 4A to FIG. 4C are schematic diagrams of sensing the position of a vehicle by using an ultra wide band device according to one or more embodiments of the disclosure.

## Detailed Description of Embodiments

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies may be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

It should be noted that, the term "ultra wide band device" in the context of the disclosure is also referred to as a UBW device, which is a device that uses nanosecond narrow pulses to transmit data, and has many advantages such as high transmission rate, low power consumption, high positioning accuracy, and the like.

Various exemplary embodiments according to the disclosure will be described below in detail with reference to the accompanying drawings.

FIG. 1 is a flowchart of a method for controlling vehicle battery swapping according to one or more embodiments of the disclosure.

In step 110, in response to a vehicle entering a ranging range of a plurality of ultra wide band devices arranged in a battery swap station, a distance between the vehicle and the battery swap station is sensed by using the plurality of ultra wide band devices.

Optionally, in step 110, an appropriate quantity of ultra wide band devices may be arranged at appropriate positions of each of the battery swap station and the vehicle, and a ranging algorithm may be designed, to calculate a distance between the ultra wide band device on the vehicle side and the ultra wide band device on the battery swap station side. Exemplarily, the ranging algorithm may include but is not limited to a time of flight (ToF) ranging algorithm, a time difference of arrival (TDoA) ranging algorithm, an angle of arrival (AoA) ranging algorithm, a combination of one or more of the above algorithms, or the like.

In an embodiment, in response to the vehicle entering a coverage range of WiFi or BLE of the battery swap station, the plurality of ultra wide band devices arranged in the battery swap station are enabled to sense the distance between the vehicle and the battery swap station.

In step 120, whether the vehicle is in a predetermined battery swap area is determined based on the sensed distance between the vehicle and the battery swap station. Exemplarily, the predetermined battery swap area may be a rectangular area (for example, it is five meters long and three meters wide) in front of the door of the battery swap station. Optionally, the shape and size of the predetermined battery swap area may be adjusted according to actual application scenarios and requirements.

Optionally, one or more image collection devices (for example, cameras) arranged in the battery swap station may also be used to collect an image of the vehicle and a convolutional neural network is used to process the collected image of the vehicle, to determine, based on a processing result of the convolutional neural network, whether the vehicle is in the predetermined battery swap area. Exemplarily, the convolutional neural network may be defined as $N$, the collected image of the vehicle is $I$, an image of the vehicle collected by using a first image collection device is $I_1$, and an image of the vehicle collected by using a second image collection device is $I_2$. If an inference result is defined as $\eta$, and a threshold used by the convolutional neural network is $\triangle$, the processing result of the convolutional neural network $N$ may be defined as:

$$\mathcal{N}(I_1, I_2) = \eta; \quad \mathcal{N}(I_1, I_2) = \begin{cases} 1; \eta > \Delta \\ 0; \eta < \Delta \end{cases}$$

where $\mathcal{N}(I_1, I_2) = 1$ indicates that the vehicle is in the predetermined battery swap area, and $\mathcal{N}(I_1, I_2) = 0$ indicates that the vehicle is not in the predetermined battery swap area.

The plurality of ultra wide band devices and the one or more image collection devices arranged in the battery swap station are used to determine whether the vehicle is in the predetermined battery swap area, which can further improve the determining accuracy and reliability.

When it is determined that the vehicle is in the predetermined battery swap area, step 130 is performed. In step 130, whether the vehicle is a target service vehicle is determined.

Optionally, in step 130, whether the vehicle is a target service vehicle may be determined in the following manners: using the plurality of ultra wide band devices arranged in the battery swap station to establish a communication path with the vehicle; receiving an authentication signal from the vehicle via the established communication path and determining, based on the authentication signal, whether the vehicle is a vehicle in a current service list; and in response to determining that the vehicle is a vehicle in the current service list, determining that the vehicle is a target service vehicle. Exemplarily, verification information encrypted by SHA256 may be used to verify whether the vehicle is a vehicle in the current service list. A communication mechanism established by using the ultra wide band devices is used to determine whether the vehicle is a target service vehicle, which can omit additional communication mechanisms (for example, WiFi, Bluetooth, and the like), and avoid an impact of environmental factors (for example, humidity, temperature, and the like) on the sensor, thus being able to adapt to a full-automatic battery swapping mode in various application scenarios.

It should be noted that, without departing from the spirit and scope of the disclosure, various interactive modes and verification modes may be used to perform the operations in step 130, so as to be compatible with various existing interactive modes and verification modes of the battery swap station.

When it is determined that the vehicle is a target service vehicle, step 140 is performed to enable an auxiliary battery swapping operation to guide the vehicle to a battery swap platform from the predetermined battery swap area. Optionally, the auxiliary battery swapping operation includes but is not limited to: opening the door of the battery swap station, planning a parking path, monitoring the parking path, detecting in-position parking of the vehicle, monitoring a posture of the vehicle in the station, and the like. Correspondingly, when it is determined that the vehicle is a target service vehicle, the vehicle may be instructed to enable an automatic parking mode thereon. Therefore, the operation of confirming battery swapping by a user is avoided. Optionally, in the process where the automatic parking is enabled on the vehicle to travel to the battery swap platform of the battery swap station, the auxiliary battery swapping operation is enabled to accurately guide the vehicle to the battery swap platform. Optionally, after the vehicle is guided to the battery swap platform through the auxiliary battery swapping operation and the vehicle is detected to be in position, a battery swapping operation may be automatically enabled.

Optionally, when it is determined that the vehicle is a target service vehicle, location information of the vehicle may be determined by using the plurality of ultra wide band devices. Optionally, when it is determined that the vehicle is a target service vehicle, various sensor devices (for example, sensor devices for positioning and tracking) arranged in the battery swap station may be enabled to accurately guide the vehicle to the battery swap platform.

When it is determined that the vehicle is a target service vehicle, the auxiliary battery swapping operation, various sensor devices arranged in the battery swap station and other auxiliary functions of the battery swap station are automatically enabled, which may significantly reduce the operation resource consumption of the battery swap station and improve the safety performance and management efficiency of the battery swap station.

When it is determined that the vehicle is not a target service vehicle, step 150 is performed to instruct the vehicle to leave the predetermined battery swap area. Exemplarily, an auxiliary driving function of the vehicle may be used to instruct the vehicle to leave the predetermined battery swap area or instruct a user to drive off the predetermined battery swap area.

According to an aspect of the disclosure, the method for controlling vehicle battery swapping can implement a ranging function of the battery swap station for the vehicle by establishing interaction between the battery swap station and the vehicle using the ultra wide band device, enable a verification function for a vehicle identity after the ranging function is completed, and automatically enable an auxiliary battery swapping operation after the ranging is completed and identity verification is passed, to guide the vehicle to the battery swap platform, so that a tedious battery swapping process requiring repeated confirmation by a user is converted into a fully automatic battery swapping initial process, which improves the battery swapping efficiency and user experience, and reduces the labor cost of the battery swap station.

FIG. 2 is a schematic block diagram of a computer system for controlling vehicle battery swapping according to one or more embodiments of the disclosure.

As shown in FIG. 2, the computer system 20 for controlling vehicle battery swapping includes a communications unit 210, a memory 220 (for example, a non-volatile memory such as a flash memory, a ROM, a hard disk drive, a magnetic disk, an optical disc, or the like), a processor 230, and a computer program 240 stored on the memory 220 and executable on the processor 230.

The communications unit 210, as a communications interface, is configured to establish a communication connection between the computer system 20 and an external device or network (for example, a mobile phone, a remote server, or the like).

The memory 220 stores the computer program 240 executable by the processor 230. The processor 230 is configured to execute the computer program 240 to implement the method for controlling vehicle battery swapping according to one or more embodiments of the disclosure.

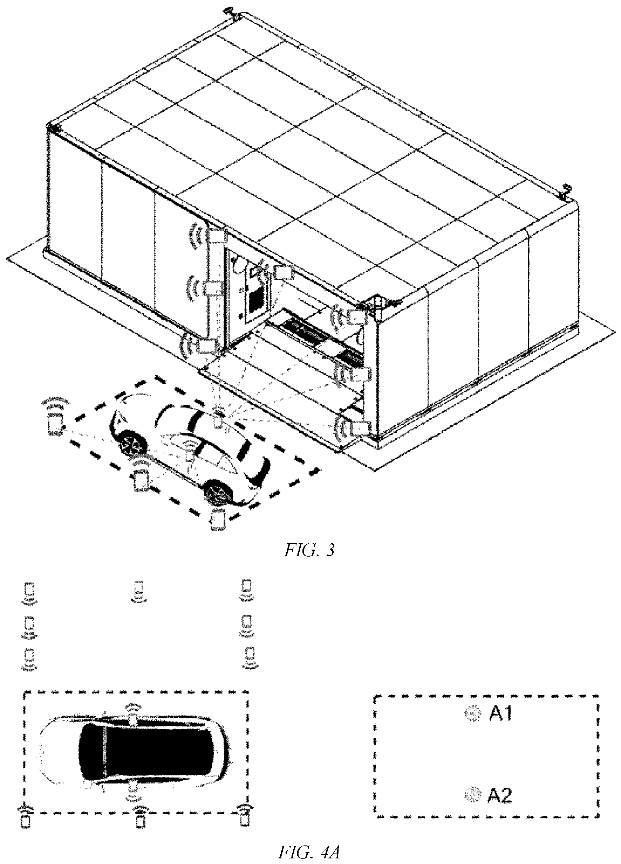

FIG. 3 is a schematic diagram of arranging an ultra wide band device according to one or more embodiments of the disclosure.

Exemplarily, as shown in FIG. 3, a total of seven ultra wide band devices are arranged on the left, right, and cross beams of a battery swap station, and three ultra wide band devices are arranged at the edge of a predetermined battery swap area (indicated by a dashed rectangular box) for a vehicle. Exemplarily, as shown in FIG. 3, the seven ultra wide band devices arranged in the battery swap station may be equally spaced and the three ultra wide band devices arranged at the edge of the predetermined battery swap area for the vehicle may also be equally spaced. As shown in FIG. 3, two ultra wide band devices may be respectively arranged on both sides of the front end of the vehicle.

It should be noted that, the quantities and positions of ultra wide band devices arranged in the battery swap station, in the predetermined battery swap area for the vehicle, and on the vehicle shown in FIG. 3 are only exemplary, without departing from the spirit and scope of the disclosure, the quantities and positions of the ultra wide band devices arranged in the battery swap station, the predetermined battery swap area for the vehicle, and the vehicle may be changed according to actual requirements and application scenarios.

To ensure that the ultra wide band devices can accurately sense the distance between the vehicle and the battery swap station and determine the location information of the vehicle, it is necessary to test signals sent by the ultra wide band devices.

In an embodiment, the plurality of ultra wide band devices arranged in the battery swap station may be configured in the following manners: a strength, of a signal sent by each of the plurality of ultra wide band devices, obtained when the signal arrives at the vehicle is greater than or equal to a preset strength threshold; a duration, of a signal sent by each of the plurality of ultra wide band devices, obtained when the signal arrives at the vehicle is greater than or equal to a preset duration threshold; and a quantity of the plurality of ultra wide band devices is greater than or equal to a preset quantity threshold.

For example, the strength and duration of the signal sent by the ultra wide band device may be tested in the

following manners:

$$M_\alpha = \{B_\alpha \mid \forall B \in M; \mathcal{J}_s(B,\alpha) \geq s; \mathcal{J}_t(B,\sigma) \geq t\}$$

$$M_\beta = \{B_\beta \mid \forall B \in M; \mathcal{J}_s(B,\beta) \geq s; \mathcal{J}_t(B,\sigma) \geq t\}$$

where a matrix $M$ represents a signal matrix of the plurality of ultra wide band devices arranged on the battery swap station side, $B$ represents a signal source of a single ultra wide band device on the battery swap station side, $\alpha$ and $\beta$ represent signals provided by the ultra wide band devices arranged on the vehicle side, $\mathcal{J}_s$ and $\mathcal{J}_t$ respectively represent measurement methods for the signal strength and the signal duration, $\sigma$ represents a serial number of a test node on the vehicle side, $M_\sigma$ represents a set of signal sources where signals in the signal matrix of the plurality of ultra wide band devices arranged in the battery swap station side meet test screening conditions and arrive at the vehicle side, $s$ represents the preset strength threshold, and $t$ represents the preset duration threshold.

Exemplarily, the preset duration threshold t may be set as the time taken by a whole process from the time when the vehicle enters the predetermined battery swap area to the time when the vehicle is completely in the predetermined battery swap area. Exemplarily, the ultra wide band devices that meet the above tests of the signal strength and signal duration are counted, so that the preset quantity threshold of the ultra wide band devices may be determined.

Interaction is established between the ultra wide band devices arranged at appropriate positions of the vehicle and the plurality of ultra wide band devices arranged on the battery swap station side, such that the battery swap station may implement the functions of ranging, positioning, and verification of the vehicle. Therefore, in actual application, the ultra wide band devices may be arranged at the appropriate positions of the vehicle according to assembly requirements without depending on a specific vehicle model, so that the vehicle can implement a fully automatic battery swapping initial process in response to, for example, the method for controlling vehicle battery swapping described above with reference to FIG. 1.

FIG. 4A to FIG. 4C are schematic diagrams of sensing the position of a vehicle by using an ultra wide band device according to one or more embodiments of the disclosure. FIG. 4A to FIG. 4C show, in a tiled form, arrangements of various ultra wide band devices described above with reference to FIG. 3.

FIG. 4A shows a direct measurement method. As shown in FIG. 4A, the seven ultra wide band devices arranged in the battery swap station and the three ultra wide band devices arranged at the edge of the predetermined battery swap area for the vehicle may be used to accurately measure positions A1 and A2 of the two ultra wide band devices respectively arranged on both sides of the front end of the vehicle.

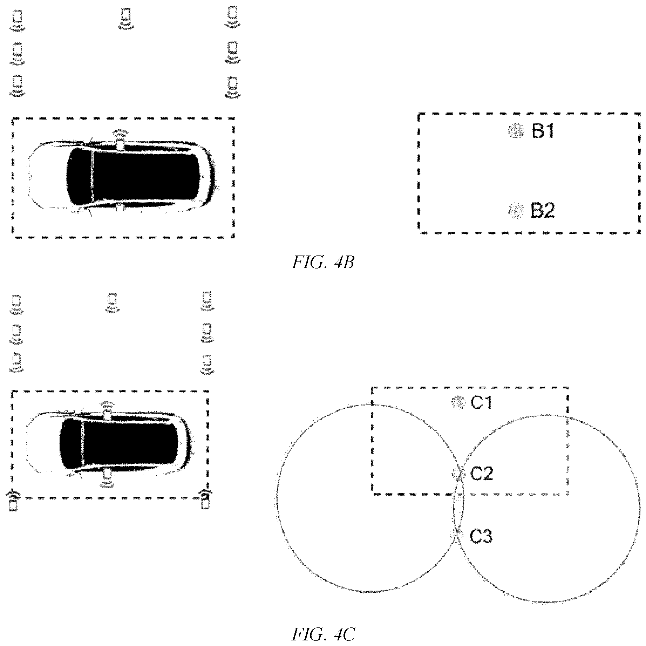

FIG. 4B shows a passive measurement method. As shown in FIG. 4B, compared to FIG. 4A, the three ultra wide band devices arranged at the edge of the predetermined battery swap area for the vehicle and the one ultra wide band device arranged on the side of the vehicle that is away from the battery swap station may be omitted. In the passive measurement method, a position B1 of the ultra wide band device arranged on the side of the vehicle that is close to the battery swap station may be measured, but a position B2 of the ultra wide band device arranged on the side of the vehicle that is away from the battery swap station cannot be measured. Therefore, in the passive measurement method, whether the vehicle is in the predetermined battery swap area can be determined, but complete posture information of the vehicle cannot be measured.

FIG. 4C shows a simplified measurement method. As shown in FIG. 4C, compared to FIG. 4A, two ultra wide band devices may be arranged at the edge of the predetermined battery swap area for the vehicle. In the simplified measurement method, two ultra wide band devices are used to measure posture information of the vehicle instead of using three or more ultra wide band devices required for traditional ultra wide band positioning. In the simplified measurement method, the position C1 of the ultra wide band device arranged on the side of the vehicle that is close to the battery swap station has already been measured, so that when a height of the vehicle is basically determined, it is only necessary to measure two possible positions C2 and C3 of the ultra wide band device arranged on the side of the vehicle that is away from the battery swap station, and the position C3 obviously falling outside a width of the vehicle is discarded based on vehicle width information, thereby determining the positions C1 and C2 of the two ultra wide band devices respectively arranged on both sides of the front end of the vehicle.

It should be noted that, the quantities and positions of ultra wide band devices arranged in the battery swap station, the predetermined battery swap area for the vehicle, and on the vehicle in the three measurement methods respectively described with reference to FIG. 4A to FIG. 4C are only exemplary, and without departing from the spirit and scope of the disclosure, one of the three measurement methods or another suitable measurement method may be selected according to actual requirements and application scenarios.

In addition, the disclosure may alternatively be implemented as a computer storage medium, which has stored therein a program for causing a computer to perform the method for controlling vehicle battery swapping according to an aspect of the disclosure.

Here, various forms of computer storage media, such as disks (for example, a magnetic disk, an optical disc, etc.), cards (for example, a memory card, an optical card, etc.), semiconductor memories (for example, a ROM, a non-volatile memory, etc.), and tapes (for example, a magnetic tape, a cassette tape, etc.) may be used as the computer storage medium.

Various embodiments provided in the disclosure may be implemented by hardware, software, or a combination of hardware and software where applicable. In addition, without departing from the scope of the disclosure, various hardware components and/or software components described in this specification may be combined into a combined component including software, hardware, and/or both where applicable. Without departing from the scope of the disclosure, various hardware components and/or software components described in this specification may be separated into sub-components including software, hardware, or both where applicable. In addition, where applicable, it is contemplated that software components may be implemented as hardware components, and vice versa.

Software (such as program code and/or data) in the disclosure may be stored on one or more computer storage media. It is also contemplated that the software identified herein may be implemented using one or more general-purpose or special-purpose computers and/or computer systems, networked and/or otherwise. The steps described herein may be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1.   A method for controlling vehicle battery swapping, comprising the following steps:

in response to a vehicle entering a ranging range of a plurality of ultra wide band devices arranged in a battery swap station, sensing a distance between the vehicle and the battery swap station by using the plurality of ultra wide band devices;
determining, based on the sensed distance between the vehicle and the battery swap station, whether the vehicle is in a predetermined battery swap area;
in response to determining that the vehicle is in the predetermined battery swap area, determining whether the vehicle is a target service vehicle; and
in response to determining that the vehicle is a target service vehicle, enabling an auxiliary battery swapping operation to guide the vehicle to a battery swap platform from the predetermined battery swap area.

2.   The method according to claim 1, further comprising:
in response to determining that the vehicle is not a target service vehicle, instructing the vehicle to leave the predetermined battery swap area.

3.   The method according to claim 1 or 2, wherein the auxiliary battery swapping operation comprises one or more of the following: opening the door of the battery swap station, planning a parking path, monitoring the parking path, detecting in-position parking of the vehicle, and monitoring a posture of the vehicle in the station.

4.   The method according to any one of claims 1 to 3, further comprising:

using one or more image collection devices arranged in the battery swap station to collect an image of the vehicle;
using a convolutional neural network to process the collected image of the vehicle; and
determining, based on a processing result of the convolutional neural network, whether the vehicle is in the predetermined battery swap area.

5. The method according to any one of claims 1 to 4, wherein the determining whether the vehicle is a target service vehicle comprises:

using the plurality of ultra wide band devices arranged in the battery swap station to establish a communication path with the vehicle;
receiving an authentication signal from the vehicle via the established communication path and determining, based on the authentication signal, whether the vehicle is a vehicle in a current service list; and
in response to determining that the vehicle is a vehicle in the current service list, determining that the vehicle is a target service vehicle.

6. The method according to any one of claims 1 to 5, further comprising:
in response to determining that the vehicle is a target service vehicle, determining location information of the vehicle by using the plurality of ultra wide band devices.

7. The method according to any one of claims 1 to 6, further comprising:
in response to determining that the vehicle is a target service vehicle, enabling a sensor device arranged in the battery swap station.

8. The method according to any one of claims 1 to 7, further comprising:
in response to determining that the vehicle is a target service vehicle, instructing the vehicle to enable an automatic parking operation.

9. The method according to any one of claims 1 to 8, wherein the plurality of ultra wide band devices arranged in the battery swap station are configured in the following manners:

a strength, of a signal sent by each of the plurality of ultra wide band devices, obtained when the signal arrives at the vehicle is greater than or equal to a preset strength threshold;
a duration, of a signal sent by each of the plurality of ultra wide band devices, obtained when the signal arrives at the vehicle is greater than or equal to a preset duration threshold; and
a quantity of the plurality of ultra wide band devices is greater than or equal to a preset quantity threshold.

10. A computer system for controlling vehicle battery swapping, comprising:

a memory;
a processor; and
a computer program stored on the memory and executable on the processor, wherein the execution of the computer program causes the following steps to be performed:

in response to a vehicle entering a ranging range of a plurality of ultra wide band devices arranged in a battery swap station, sensing a distance between the vehicle and the battery swap station by using the plurality of ultra wide band devices;
determining, based on the sensed distance between the vehicle and the battery swap station, whether the vehicle is in a predetermined battery swap area;
in response to determining that the vehicle is in the predetermined battery swap area, determining whether the vehicle is a target service vehicle; and
in response to determining that the vehicle is a target service vehicle, enabling an auxiliary battery swapping operation to guide the vehicle to a battery swap platform from the predetermined battery swap area.

11. The system according to claim 10, wherein the execution of the computer program further causes the following step to be performed:
in response to determining that the vehicle is not a target service vehicle, instructing the vehicle to leave the predetermined battery swap area.

12. The system according to claim 10 or 11, wherein the auxiliary battery swapping operation comprises one or more of the following: opening the door of the battery swap station, planning a parking path, monitoring the parking path, detecting in-position parking of the vehicle, and monitoring a posture of the vehicle in the station.

13. The system according to any one of claims 10 to 12, wherein the execution of the computer program further causes the following step to be performed:

> using one or more image collection devices arranged in the battery swap station to collect an image of the vehicle;
> using a convolutional neural network to process the collected image of the vehicle; and
> determining, based on a processing result of the convolutional neural network, whether the vehicle is in the predetermined battery swap area.

14. The system according to any one of claims 10 to 13, wherein the determining whether the vehicle is a target service vehicle further comprises:

> using the plurality of ultra wide band devices arranged in the battery swap station to establish a communication path with the vehicle;
> receiving an authentication signal from the vehicle via the established communication path and determining, based on the authentication signal, whether the vehicle is a vehicle in a current service list; and
> in response to determining that the vehicle is a vehicle in the current service list, determining that the vehicle is a target service vehicle.

15. The system according to any one of claims 10 to 14, wherein the execution of the computer program further causes the following step to be performed:
in response to determining that the vehicle is a target service vehicle, determining location information of the vehicle by using the plurality of ultra wide band devices.

Sense a distance
between a vehicle and a
battery swap station
_110_

Is the
vehicle in a predetermined battery
swap area?
_120_
No

Yes

Is the
vehicle a target service
vehicle?
_130_

Yes

No

Enable an auxiliary battery
swapping operation
_140_

Instruct the vehicle to leave
the predetermined battery
swap area
_150_

*FIG. 1*

**210**

Communications
unit

Processor

**230**

Memory

Computer program | **240**

**220**

**20**

*FIG. 2*

*FIG. 3*

*FIG. 4A*

*FIG. 4B*

*FIG. 4C*

Europäisches Patentamt

European Patent Office

Office européen des brevets

# EUROPEAN SEARCH REPORT

Application Number

EP 23 15 8039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/176223 A1 (Q FREE ASA [NO]; SAMUELS ADRIAN JAMES [GB]) 10 September 2021 (2021-09-10) | 1-7,9-15 | INV. B60L53/36 B60L53/65 |
| A | * page 3, line 31 - line 32 * * page 8, line 18 - line 20 * * page 10, line 16 - line 18 * * page 16, line 19 - line 25 * * figures 1, 4, 5 * | 8 | B60L53/80 B60L53/30 B60L53/66 B60L53/68 |
| | ----- | | |
| X | US 2017/174093 A1 (OETTLE GERALD HEINRICH [CN] ET AL) 22 June 2017 (2017-06-22) * paragraphs [0005], [0006], [0049] * * figure 3 * | 1,8-10 | |
| | ----- | | |

TECHNICAL FIELDS SEARCHED (IPC)

B60L

The present search report has been drawn up for all claims

| Place of search | Date of completion of the search | Examiner |
|---|---|---|
| The Hague | 21 August 2023 | Wirth, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 8039

This annex lists the patent family members relating to the patent documents cited in the above-mentioned European search report.
The members are as contained in the European Patent Office EDP file on
The European Patent Office is in no way liable for these particulars which are merely given for the purpose of information.

21-08-2023

| Patent document cited in search report | Publication date | Patent family member(s) | Publication date |
|---|---|---|---|
| WO 2021176223 A1 | 10-09-2021 | EP 4114682 A1 | 11-01-2023 |
| | | WO 2021176223 A1 | 10-09-2021 |
| US 2017174093 A1 | 22-06-2017 | CN 106470870 A | 01-03-2017 |
| | | DE 102014213195 A1 | 14-01-2016 |
| | | JP 2017527246 A | 14-09-2017 |
| | | KR 20170027770 A | 10-03-2017 |
| | | US 2017174093 A1 | 22-06-2017 |
| | | WO 2016005104 A1 | 14-01-2016 |

EPO FORM P0459

For more details about this annex : see Official Journal of the European Patent Office, No. 12/82